# EUROPEAN PATENT APPLICATION

(11) **EP 4 800 175 A1**
(43) Date of publication of application: **02.09.2026**
(21) Application number: 24925157.0
(22) Date of filing: 31.12.2024
(51) Int. Cl.: D06F 39/14, A45B 19/10, F16M 11/04, D06F 39/12, F16M 11/38, F16M 13/00, F16M 13/02

(54) **FOLDABLE LOAD-BEARING COMPONENT AND LOAD-BEARING PLATFORM**

(71) Applicant: Anhui Jiao Yang Soft Door Co., Ltd, Bozhou, Anhui 236708 (CN)
(72) Inventor: LI, Chuantao, Bozhou, Anhui 236708 (CN)
(74) Representative: Santarelli
(86) International application number: PCT/CN2024/144450
(87) International publication number: WO 2026/143468

(57) **Abstract**

A foldable object-supporting component and an object-supporting platform are provided. The foldable object-supporting component includes a supporting part folded in a continuous V shape, where one end of the supporting part is folded together to form a rotation center, and the supporting part is capable of being unfolded and folded around the rotation center; the supporting part is provided with a plurality of fan blades, and the plurality of fan blades are connected together in a V shape; the supporting part is provided with a reinforcing part, and the reinforcing part is arranged at a joint between two fan blades to reinforce a supporting strength of the supporting part. **In** the foldable object-supporting component, the reinforcing part is arranged, which can improve the supporting strength of the supporting part when the supporting part is unfolded, thereby improving the supporting capacity of the supporting part, and improving the supporting capacity of the whole object-supporting platform. Compared with the prior art, the structure is simpler, the production efficiency is high, the reinforcing part can be directly arranged on the supporting part in the process of producing the supporting part, and no additional assembly line is required, so that it is easier to control the production cost.

## Description

### Technical Field

The present disclosure relates to the technical field of electrical accessories, and in particular to a foldable object-supporting component and an object-supporting platform.

### Background of the Invention

The statement herein only provides background related to the present disclosure and do not necessarily constitute the prior art.

Because an existing drum washing machine has a side door structure, it is easy for clothes to fall off when clothes are taken, especially small pieces of clothes that have no temporary place to be stored. Therefore, an object-supporting platform that can be opened and closed synchronously with the washing machine door is needed to temporarily store some clothes.

After retrieval, the Chinese Patent Application No. CN202311277870.9 discloses a clothes receiving platform of a drum washing machine. The object-supporting platform in the above patent application does not have a strong supporting capacity. In order to improve the supporting capacity, a folding skeleton is added in the above patent application. However, the folding skeleton needs to be purchased separately or produced using another production line, and needs to be further assembled after production, which is not conducive to improving production efficiency and reducing the production cost.

### Summary of the Invention

A main objective of the present disclosure is to provide a foldable object-supporting component and an object-supporting platform with improved supporting capacity and high production efficiency.

In order to achieve the above objective, the technical solution of the present disclosure is achieved as follows: a foldable object-supporting component, including a supporting part folded in a continuous V shape, where one end of the supporting part is folded together to form a rotation center, and the supporting part is capable of being unfolded and folded around the rotation center;
the supporting part is provided with a plurality of fan blades, and the plurality of fan blades are connected together in a V shape; the supporting part is provided with a reinforcing part, and the reinforcing part is arranged at a joint between two fan blades to reinforce a supporting strength of the supporting part.

Further, the reinforcing part is a reinforcing structure formed by combining two adjacent fan blades.

Further, the reinforcing structure is one or more bonding points formed at a position close to a crease line between two adjacent fan blades.

Further, the reinforcing structure is one or more bonding lines formed at the position close to the crease line between two adjacent fan blades.

Further, the bonding line is a continuous line or a plurality of spaced line segments.

Further, the bonding point is not completely coincident with the crease line, and is configured to connect adjacent fan blades again to form a reinforcing structure; when there are a plurality of bonding points, the plurality of bonding points are arranged in a straight line and parallel to the crease line, or the plurality of bonding points are arranged in an oblique line and distributed along a length direction of the fan blade from one end close to the rotation center of the supporting part as a starting point, and gradually approach the crease line.

Further, the bonding line is not completely coincident with the crease line, and is configured to connect adjacent fan blades again to form a reinforcing structure; the bonding line is parallel to the crease line, or the bonding line is in a shape of an oblique line, and gradually approaches the crease line along the length direction of the fan blade from one end close to the rotation center of the supporting part as the starting point.

Further, the supporting part is of an integral structure, and mutually folded fan blades are formed through creases; or the supporting part is of a split structure, which is formed by a plurality of groups of independent fan blades connected to each other in a V shape.

Further, the supporting part is formed by connecting and combining a folded structure formed in a folding manner and an assembled structure formed in an assembling manner, the folded structure forms mutually folded fan blades through creases, and the assembled structure is formed by a plurality of groups of independent fan blades connected to each other in a V shape.

Further, one end of the supporting part far away from the rotation center is tilted upward.

Further, one end of the supporting part corresponding to its own rotation center is provided with a clamping component, and one end of the supporting part is folded and clamped together by the clamping component.

Further, the reinforcing part includes a reinforcing plate arranged at a joint between two adjacent fan blades, and one end of the reinforcing plate extends into the clamping component and is clamped by the clamping component.

Further, the fan blade is made of flexible cloth and/or mesh cloth.

Further, a fence is arranged at one end of the supporting part far away from the rotation center, the fence includes a surrounding frame and a plurality of surrounding rods, the plurality of surrounding rods are connected to the joint between the two blades at the same height and/or the reinforcing part, and the surrounding frame is installed at the end of the supporting part through the surrounding rods and is unfolded together with the supporting part.

Further, the supporting part is installed in an inclined posture, one end of the supporting part corresponding to its own rotation center faces downward, and one end of the supporting part far away from the rotation center faces upward.

Further, the foldable object-supporting component further includes a first magnetic attraction component and a second magnetic attraction component located at two sides of the supporting part in the length direction, respectively, where the first magnetic attraction component and the second magnetic attraction component attract each other when the supporting part is in a folded state.

A foldable object-supporting platform is provided, including the foldable object-supporting component described above, where the object-supporting platform further includes a fixed end surface and a movable end surface which are located at two sides of the supporting part in the length direction, respectively, and are connected with the fan blades at two sides of the supporting part;
the fixed end surface is configured to fix the object-supporting platform below an opening-closing door of an object to be installed;
the movable end surface is connected with the opening-closing door of the object to be installed, and when the opening-closing door is opened, the movable end surface drives the supporting part of a clothes-supporting platform to be unfolded; and when the opening-closing door is closed, the movable end surface drives the supporting part of the clothes-supporting platform to be stacked and stored.

Further, the movable end surface is connected with the opening-closing door of the object to be installed through a connection point.

Further, the first magnetic attraction component and the second magnetic attraction component are arranged on the fixed end surface and the movable end surface, respectively.

Further, the fixed end surface is a box body with one side open, and the object-supporting component in the folded state is located in the box body;
the movable end surface is a cover, one side of the cover is connected with the box body and is rotatable with respect to the box body, when the opening-closing door is closed, and the cover drives the object-supporting component to be stored in the box body and covers an open part on one side of the box body.

The present disclosure has the following beneficial effects.

In the foldable object-supporting component, the reinforcing part is arranged, which can improve the supporting strength of the supporting part when the supporting part is unfolded, thereby improving the supporting capacity of the supporting part, and improving the supporting capacity of the whole object-supporting platform. Compared with the prior art, the structure is simpler, the production efficiency is high, the reinforcing part can be directly arranged on the supporting part in the process of producing the supporting part, and no additional assembly line is required, so that it is easier to control the production cost.

### Brief Description of the Drawings

In the attached drawings:
FIG. 1 is a three-dimensional structural diagram of the foldable object-supporting component according to the present disclosure when being unfolded;
FIG. 2 is an enlarged diagram at A in FIG. 1;
FIG. 3 is a schematic structural diagram of the fence according to the present disclosure;
FIG. 4 is an enlarged diagram at B in FIG. 3;
FIG. 5 is a schematic diagram of a three-dimensional structure of reinforcing parts distributed in parallel according to the present disclosure;
FIG. 6 is a schematic diagram of a three-dimensional structure of a reinforcing part at a single side extending obliquely according to the present disclosure;
FIG. 7 is a front diagram of a reinforcing part at a single side extending obliquely according to the present disclosure;
FIG. 8 is a schematic diagram of a three-dimensional structure of reinforcing parts on an upper side and a lower side extending obliquely according to the present disclosure;
FIG. 9 is a schematic diagram of a three-dimensional structure of reinforcing parts on an upper side and a lower side extending obliquely according to the present disclosure from another perspective;
FIG. 10 is a front diagram of reinforcing parts on an upper side and a lower side extending obliquely according to the present disclosure;
FIG. 11 is a schematic diagram of a supporting part with an end tilted upward according to the present disclosure when being unfolded;
FIG. 12 is a schematic diagram of a supporting part with an end tilted upward according to the present disclosure when being unfolded (the fence is omitted);
FIG. 13 is an enlarged diagram at C in FIG. 9;
FIG. 14 is a schematic diagram of installing the reinforcing plate according to the present disclosure; and
FIG. 15 is a schematic diagram of the closed and open state of the box-shaped fixed end surface according to the present disclosure.

### Description of reference numerals:

1. Supporting part; 11. Fan blade; 12. Reinforcing structure; 13. Reinforcing plate; 14. Clamping component; 2. Fixed end surface; 3. Movable end surface; 4. Fence; 41. Surrounding frame; 42. Surrounding rod.

### Detailed Description of Embodiments

The present disclosure will be further described in detail with reference to the attached drawings and embodiments. Obviously, the described embodiments are only some of the embodiments of the present disclosure, rather than all of the embodiments. The embodiments in the present disclosure and the features in the embodiments can be combined with each other without conflict. Based on the embodiments in the present disclosure, all other embodiments obtained by those skilled in the art without paying creative labor belong to the scope of protection of the present disclosure.

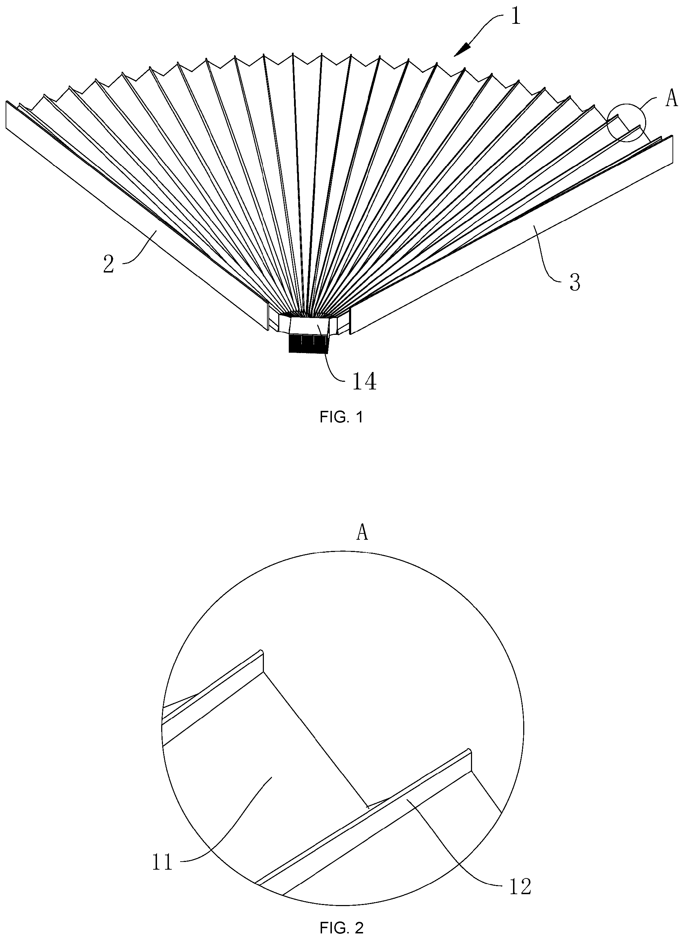

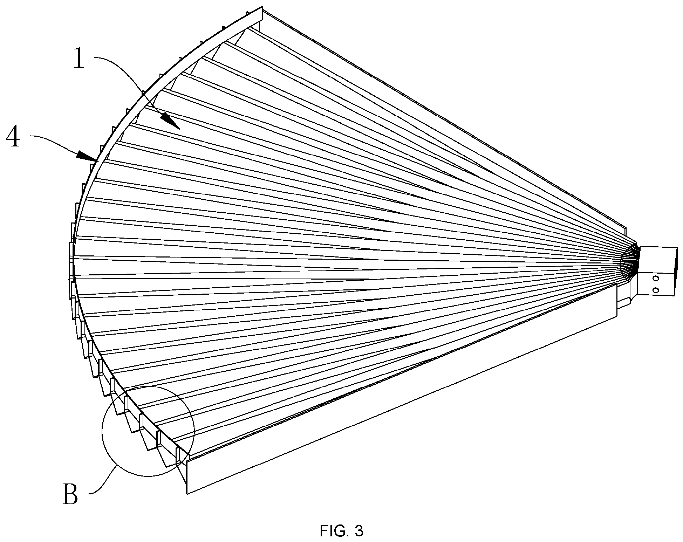

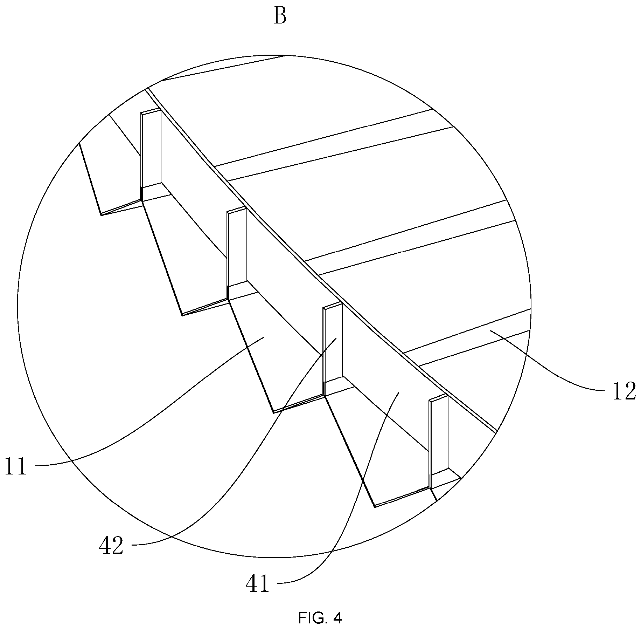

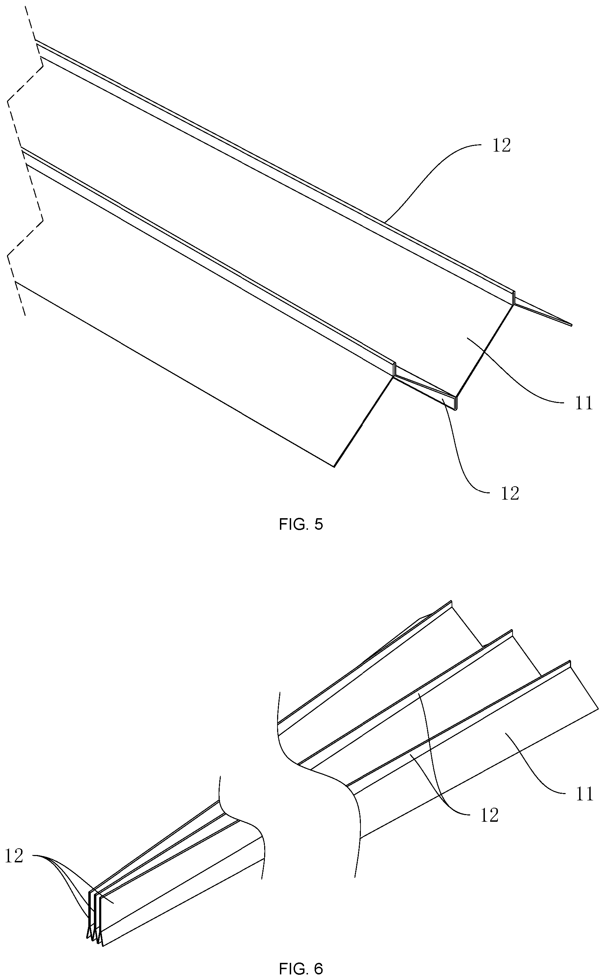

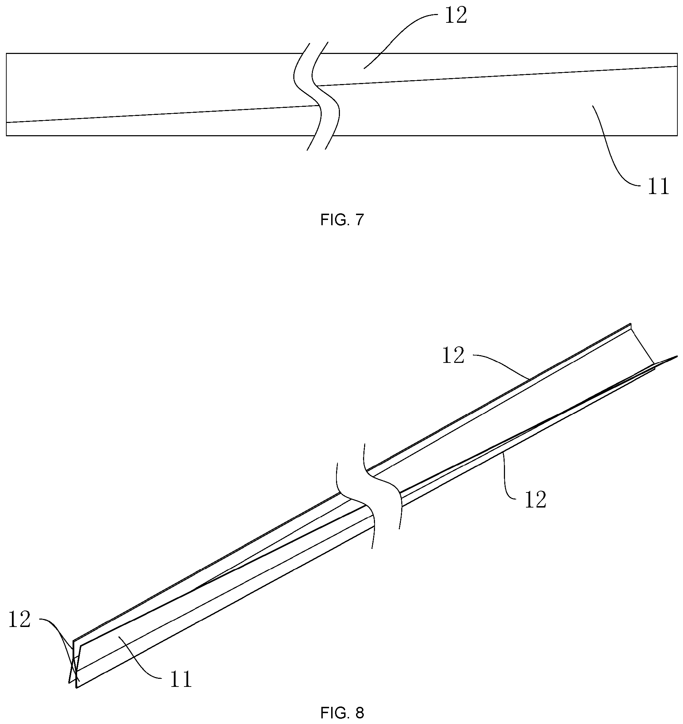

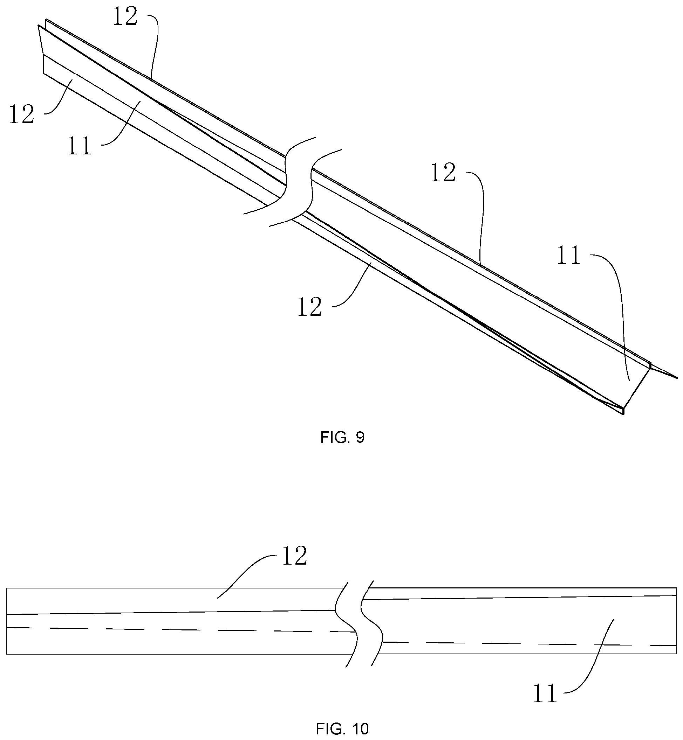

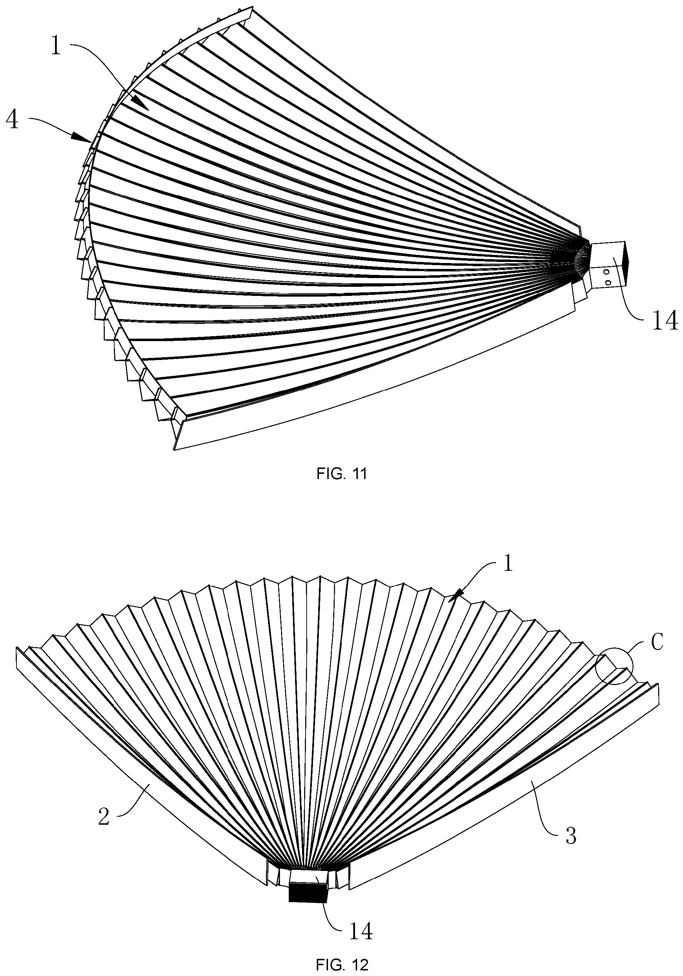

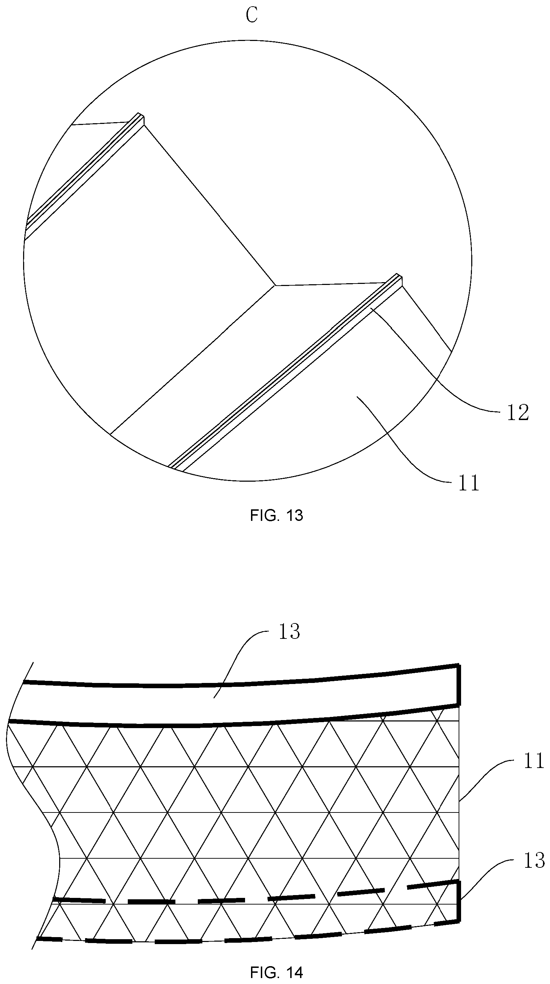

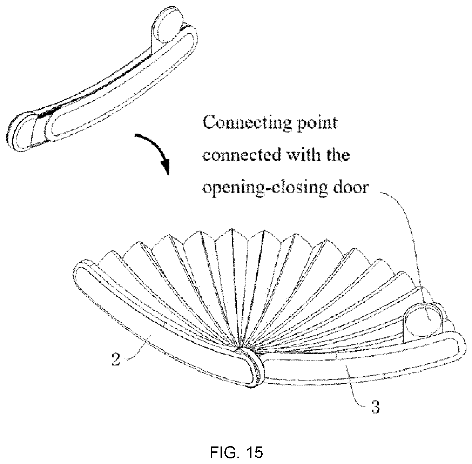

Refer to FIG. 1 to FIG. 15.

The present disclosure discloses a foldable object-supporting component, which includes a supporting part 1 folded in a continuous V shape (also referred to as folded in a continuous W shape and in a continuous M shape). One end of the supporting part 1 is folded together to form a rotation center, and the supporting part 1 is capable of being unfolded and folded around the rotation center. One side of the supporting part 1 in the length direction is provided with a fixed end surface 2, and the other side of the supporting part 1 in the length direction is provided with a movable end surface 3. The supporting part 1 is capable of being unfolded and supporting materials. The fixed end surface 2 is configured to fix one side of the supporting part 1 on the body of the object to be installed. The movable end surface 3 is configured to fix the other side of the supporting part 1 on the opening-closing door of the object to be installed, so as to synchronously unfold the supporting part 1 when the opening-closing door of the object to be installed is opened.

The supporting part 1 is provided with a plurality of fan blades 11. One end of each of two adjacent fan blades 11 is connected with each other (which may also be described as the plurality of fan blades 11 being connected together in a V shape /W shape /M shape). The supporting part 1 is provided with a reinforcing part, and the reinforcing part is arranged at a joint between two fan blades 11 to reinforce a supporting strength of the supporting part 1.

In a specific implementation, the above V shape can be a V shape with an upward opening or a V shape with a downward opening. The reinforcing part may be arranged at the upper part of the supporting part 1, or at the lower part of the supporting part 1, or at any position. The reinforcing part is arranged, which can improve the supporting strength of the supporting part 1 when the supporting part 1 is unfolded, thereby improving the supporting capacity of the supporting part 1, and improving the supporting capacity of the whole object-supporting component. Compared with the prior art, the structure is simpler, the production efficiency is high, the reinforcing part can be directly arranged on the supporting part in the process of producing the supporting part 1, and no additional assembly line is required, so that it is easier to control the production cost.

Preferably, the supporting part 1 may be made of flexible materials such as PP (polypropylene), PET plastic (polyethylene terephthalate plastic) or PVC (polyvinyl chloride) with a thickness of 0.1 to 0.6 mm.

Preferably, the fixed end surface 2 and the movable end surface 3 are fixed on the object to be installed in a pasting and/or magnetic attraction manner.

The supporting part 1 can be formed by folding a whole piece of material, or by connecting a plurality of independent fan blades 11 in sequence. Certainly, it is also possible that a part of the supporting part is formed by folding a piece of material, the other part of the supporting part is formed by connecting a plurality of independent fan blades 11 in sequence, and then all the parts are combined and connected together in any manner.

In one embodiment, the reinforcing part is a reinforcing structure 12 formed by combining two adjacent fan blades 11. The whole supporting capacity of the supporting part 1 is improved by the reinforcing structure 12. In this way, the structure is simpler, the production cost is lower, and the overall thickness of the supporting part 1 is almost unchanged.

It should be pointed out that two adjacent fan blades 11 can be closely combined at the position of the corresponding reinforcing structure 12, or there can be a specific gap between two adjacent fan blades, but this gap may not allow the two fan blades 11 that are combined together to be opened normally. The included angle of the opened two fan blades 11 that are combined together may be smaller than that when the two fan blades are normally opened.

It should be noted that there are various specific manners of "combining two adjacent fan blades 11 together", such as sewing, heat sealing, bonding and other manners.

The reinforcing structure 12 is one or more bonding points formed at a position close to a crease line between two adjacent fan blades 11. The bonding point is not completely coincident with the crease line, and is configured to connect adjacent fan blades again to form a reinforcing structure. When there are a plurality of bonding points, the plurality of bonding points are arranged in a straight line and parallel to the crease line, or the plurality of bonding points are arranged in an oblique line and distributed along a length direction of the fan blade 11 from one end close to the rotation center of the supporting part 1 as a starting point, and gradually approach the crease line. In addition, when a plurality of bonding points are arranged in a straight line, the plurality of bonding points can also be arranged up and down to form a plurality of groups of bonding points arranged in a straight line.

The reinforcing structure 12 is one or more bonding lines formed at the position close to the crease line between two adjacent fan blades 11. The bonding line is a continuous line or a plurality of spaced line segments. The bonding line is not completely coincident with the crease line, and is configured to connect adjacent fan blades again to form a reinforcing structure. The bonding line is parallel to the crease line, or the bonding line is in a shape of an oblique line, and gradually approaches the crease line along the length direction of the fan blade 11 from one end close to the rotation center of the supporting part 1 as the starting point. In addition, a plurality of bonding lines can be distributed up and down.

In addition, a plurality of reinforcing parts may be arranged and distributed on the supporting part 1 at intervals. Certainly, a plurality of reinforcing parts can also be continuously distributed on the supporting part 1. When continuously distributed, the plurality of reinforcing parts can be distributed on the top and/or bottom of the supporting part 1.

Preferably, the reinforcing part extends from one end of the supporting part 1 to the other end of the supporting part 1. Certainly, the extension form of the reinforcing part may be a continuous extension, or an intermittent extension in sections, an extension point by point. Certainly, a specific distance can be left between the reinforcing part and both ends of the supporting part 1.

It should be pointed out that "the bonding line is in a shape of an oblique line, and gradually approaches the crease line along the length direction of the fan blade 11 from one end close to the rotation center of the supporting part 1 as the starting point". On the one hand, the bonding line distributed in this form can form a reinforcing structure 12 in a triangular plate shape at the top and/or bottom of the supporting part 1, which can better improve the supporting effect. On the other hand, because the bonding line in a shape of an oblique line gradually approaches the crease line along the length direction of the fan blade 11 from one end close to the rotation center of the supporting part 1 as the starting point, the vertical distance between the end of the supporting part 1 located at the rotation center and the crease line is the largest, while the vertical distance between the end of the supporting part 1 far away from the rotation center and the crease line is the smallest, which may reduce the influence of the reinforcing part on the unfolding state of the supporting part 1, and may not cause the end of the supporting part 1 far away from the rotation center to be unable to be unfolded or unfolded to an extent that is too small. Moreover, it is not easy to unfold the end where the rotation center of the supporting part 1 is located. The arrangement of the clamping component 14 described latter can be directly omitted, so that the supporting part has some effects that the clamping component 14 has.

In an embodiment, one end of the supporting part 1 corresponding to its own rotation center is provided with a clamping component 14, and one end of the supporting part 1 is folded and clamped together by the clamping component 14. With this design, the clamping component 14 can provide radial tension to the supporting part 1 to enhance structural stability, prevent the edge from sagging, and further improve the supporting capacity of the supporting part 1. The clamping component 14 can be made into a sleeve shape. The end of the supporting part 1 can be folded and sleeved in the sleeve, and then the end of the supporting part 1 can be fixed in the sleeve in such a manner that components such as bolts pass through the sleeve. Certainly, other clamping forms in the prior art can also be directly used for the clamping component 14.

In one embodiment, the reinforcing part includes a reinforcing plate 13 arranged at a joint between two adjacent fan blades 11. With this design, the supporting capacity of the supporting part 1 is further enhanced by the reinforcing plates 13. At the same time, compared with the supporting part 1 formed by continuous folding, the supporting part 1 assembled from a plurality of fan blades 11 is easier to be equipped with the reinforcing plate 13, and can be directly integrated into the original assembly production line. Certainly, the reinforcing plate 13 can also be arranged on the supporting part 1 folded from a whole piece of material. For example, the reinforcing plate 13 can be fixed on the material to be folded before the supporting part is folded, and then the reinforcing plate 13 can be automatically integrated on the supporting part in the folding molding process. Certainly, the reinforcing plate 13 may also be fixed with the reinforcing structure 12 through an additional process to further enhance the supporting capacity of the supporting part 1.

In one embodiment, the fan blade 11 is made of flexible cloth and/or mesh cloth. One end of the reinforcing plate 13 extends into the clamping component 14 and is clamped by the clamping component 14. In a specific implementation, because the supporting part 1 has a large rebound force when being folded, when the supporting part 1 is installed on the drum washing machine, the side door of the drum washing machine is easily bounced off by the rebound force of the supporting part 1, and the thickness of the supporting part 1 may increase sharply after the reinforcing plate 13 is added. Therefore, on the basis of adding the reinforcing plate 13, this solution uses a thin and flexible cloth and/or mesh cloth with no rebound force to manufacture the fan blade 11. Then, one end of the reinforcing plate 13 extends into the clamping component 14 and is clamped by the clamping component 14, which not only ensures the supporting capacity of the supporting part 1, but also reduces the rebound force of the supporting part 1.

Preferably, the flexible cloth is common cloth in the market, such as cotton cloth, linen, silk, wool fabric, man-made fiber, synthetic fiber, blended fabric and so on.

When one end of the reinforcing plate 13 extends into the clamping component 14 and is clamped by the clamping component 14, the reinforcing plate 13 may be made of materials such as PP (polypropylene), PET plastic (polyethylene terephthalate plastic), PVC (polyvinyl chloride) or even a metal sheet. When one end of the reinforcing plate 13 does not extend into the clamping component 14 (at this time, the fan blade 11 is not made of flexible cloth and/or mesh cloth) or rotatably cooperates with the clamping component 14, the reinforcing plate 13 may also be made of materials such as a hard plate and a steel sheet.

In one embodiment, one end of the supporting part 1 far away from the rotation center is tilted upward. Certainly, both ends of the supporting part 1 may be tilted upward.

Specifically, the "being tilted upward" can mean being tilted upward in an arc shape, or being tilted upward obliquely in a straight line (it is not necessary to be tilted too much, just being slightly tilted upward, and the stress is mainly adjusted by this tilted structure, so that it is not easy for the middle part of the supporting part 1 to collapse). The supporting part 1 folded from a whole piece of material can be manufactured by the existing injection molding production process during production. The supporting part 1 formed by connecting a plurality of independent fan blades 11 in sequence can be formed in such a manner that the fan blades 11 can be directly cut into the shape with the corresponding ends tilted and then are assembled. One end of the assembled supporting part 1 far away from the rotation center may be tilted.

One end of the supporting part 1 is tilted upward, so that the supporting capacity of the supporting part 1 is further improved, it is not easy for clothes to slide off the supporting part 1, the structure is simpler, the production cost is lower, and the overall thickness of the supporting part 1 may not be increased when the supporting part is folded.

In an embodiment, a fence 4 is arranged at one end of the supporting part 1 far away from the rotation center. The fence 4 includes a surrounding frame 41 and a plurality of surrounding rods 42. The plurality of surrounding rods 42 are connected to the joint between the two blades 11 at the same height and/or the reinforcing part. The surrounding frame 41 is installed at the end of the supporting part 1 through the surrounding rods 42 and is unfolded together with the supporting part 1.

In a specific implementation, the surrounding frame 41 is made of flexible material. The surrounding frame 41 may be made of cloth or the same material as the supporting part 1. A crease line corresponding to the supporting part 1 can be arranged on the surrounding frame 41. When the supporting part 1 is folded, the surrounding frame 41 is also folded when being driven by the surrounding rod 42, and when the supporting part is unfolded, the surrounding frame is unfolded together with the supporting part 1. The surrounding rod 42 may be made of a hard rod or a hard plate, and connected to the end of the supporting part 1 by means of bonding, heat sealing or sewing. Further, in the folded continuous V shape, each tip in the V shape at the same height (that is, in the V shape, the joint between two adjacent fan blades 11) is provided with a surrounding rod 42. While the surrounding frame 41 is connected with the surrounding rod 42, both ends of the fixed end surface 2 and the movable end surface 3 corresponding to the surrounding frame 41 are connected with the fixed end surface 2 and the movable end surface 3. Certainly, the bottom of the surrounding frame 41 may also be connected with the tip in the V shape at the same time.

In the present disclosure, the fence 4 is arranged, which can prevent an object from slipping off the supporting part 1, and can also enhance the supporting capacity of the supporting part 1 in turn, so that it is not easy for the middle part of the supporting part 1 to collapse.

In an embodiment, the supporting part 1 is installed in an inclined posture. One end of the supporting part 1 corresponding to its own rotation center faces downward, and one end of the supporting part 1 far away from the rotation center faces upward.

In a specific implementation, the height of the unfolded end of the supporting part 1 may naturally decrease when the supporting part is unfolded (which belongs to the inherent characteristics of such a fan when the fan is unfolded). Therefore, when the object-supporting component of the present disclosure is installed, the supporting part 1 may be installed in an inclined posture, and one end of the supporting part 1 far away from the rotation center may be installed obliquely upward, so that clothes and other materials on the supporting part 1 can be prevented from slipping down.

In an embodiment, the foldable object-supporting component further includes a first magnetic attraction component and a second magnetic attraction component located at two sides of the supporting part 1 in the length direction, respectively. The first magnetic attraction component and the second magnetic attraction component attract each other when the supporting part 1 is in a folded state. With this design, the rebound force of the supporting part 1 in the folded state may be reduced. When the object-supporting component is installed on the drum washing machine, the first magnetic attraction component and the second magnetic attraction component are arranged, which can prevent the side door of the drum washing machine from being bounced off by the rebound force of the supporting part 11, and ensure that the side door of the drum washing machine can be reliably closed.

Preferably, the first magnetic attraction component and the second magnetic attraction component may use permanent magnets.

The present disclosure further discloses a foldable object-supporting platform, including the foldable object-supporting component described above. The object-supporting platform further includes a fixed end surface 2 and a movable end surface 3 which are located at two sides of the supporting part 1 in the length direction, respectively, and are connected with the fan blades 11 at two sides of the supporting part 1;
the fixed end surface 2 is configured to fix the object-supporting platform below an opening-closing door of an object to be installed;
the movable end surface 3 is connected with the opening-closing door of the object to be installed, and when the opening-closing door is opened, the movable end surface 3 drives the supporting part 1 of a clothes-supporting platform to be unfolded; and when the opening-closing door is closed, the movable end surface 3 drives the supporting part 1 of the clothes-supporting platform to be stacked and stored.

The movable end surface 3 is connected with the opening-closing door of the object to be installed through a connection point, so that the opening-closing door can also drive the supporting part 1 to be unfolded when the supporting part 1 is not coaxial with the rotating shaft of the opening-closing door.

The first magnetic attraction component and the second magnetic attraction component are arranged on the fixed end surface 2 and the movable end surface 3, respectively, which facilitates the installation and replacement of magnetic attraction components.

The fixed end surface 2 is a box body with one side open, and the object-supporting component in the folded state is located in the box body;
the movable end surface 3 is a cover, one side of the cover is connected with the box body through a flexible connecting sheet and is rotatable with respect to the box body, when the opening-closing door is closed, and the cover drives the object-supporting component to be stored in the box body and covers an open part on one side of the box body. With this design, the object-supporting component can be stored in the box body, which not only looks more beautiful from the outside, but also prevents the object-supporting component from getting dusty and dirty and polluting clothes.

The above is only the preferred embodiment of the present disclosure, which is not used to limit the present disclosure. Any modification, equivalent replacement, improvement, etc. made within the spirit and principle of the present disclosure should be included in the scope of protection of the present disclosure.

It should be noted that if there is a directional indication (such as up and down) in the embodiment of the present disclosure, the directional indication is only used to explain the relative position relationship and the movement situation between components in a specific posture (as shown in the attached drawings). If the specific posture changes, the directional indication may also change accordingly.

In addition, the meaning of "and/or" appearing throughout the text includes three parallel solutions. Taking "A and/or B" as an example, the meaning includes the solution of A alone, the solution of B alone, or the solution where both A and B are satisfied simultaneously. In addition, if there are descriptions involving "first", "second", etc. in the embodiment of the present disclosure, the descriptions of "first" and "second" are only used for descriptive purposes, and cannot be understood as indicating or implying their relative importance or implicitly indicating the number of indicated technical features. Therefore, the features defined as "first" and "second" can explicitly or implicitly include at least one of these features. In addition, "a plurality of" refers to more than two. In addition, the technical solutions of each embodiment may be combined with each other, but must be based on what can be achieved by those skilled in the art. When the combination of technical solutions is contradictory or impossible, it should be considered that the combination of technical solutions does not exist and is not within the scope of protection claimed by the present disclosure.

## Claims

1. A foldable object-supporting component, comprising a supporting part (1) folded in a continuous V shape, wherein one end of the supporting part (1) is folded together to form a rotation center, and the supporting part (1) is capable of being unfolded and folded around the rotation center;
the supporting part (1) is provided with a plurality of fan blades (11), and the plurality of fan blades (11) are connected together in a V shape; the supporting part (1) is provided with a reinforcing part, and the reinforcing part is arranged at a joint between two fan blades (11) to reinforce a supporting strength of the supporting part (1).

2. The foldable object-supporting component according to claim 1, wherein the reinforcing part is a reinforcing structure (12) formed by combining two adjacent fan blades (11).

3. The foldable object-supporting component according to claim 2, wherein the reinforcing structure (12) is one or more bonding points formed at a position close to a crease line between two adjacent fan blades (11).

4. The foldable object-supporting component according to claim 2, wherein the reinforcing structure (12) is one or more bonding lines formed at the position close to the crease line between two adjacent fan blades (11).

5. The foldable object-supporting component according to claim 4, wherein the bonding line is a continuous line or a plurality of spaced line segments.

6. The foldable object-supporting component according to claim 3, wherein the bonding point is not completely coincident with the crease line, and is configured to connect adjacent fan blades (11) again to form a reinforcing structure; when there are a plurality of bonding points, the plurality of bonding points are arranged in a straight line and parallel to the crease line, or the plurality of bonding points are arranged in an oblique line and distributed along a length direction of the fan blade (11) from one end close to the rotation center of the supporting part (1) as a starting point, and gradually approach the crease line.

7. The foldable object-supporting component according to claim 4 or 5, wherein the bonding line is not completely coincident with the crease line, and is configured to connect adjacent fan blades again to form a reinforcing structure; the bonding line is parallel to the crease line, or the bonding line is in a shape of an oblique line, and gradually approaches the crease line along the length direction of the fan blade from one end close to the rotation center of the supporting part (1) as the starting point.

8. The foldable object-supporting component according to any one of claims 1 to 6, wherein the supporting part (1) is of an integral structure, and mutually folded fan blades (11) are formed through creases; or the supporting part (1) is of a split structure, which is formed by a plurality of groups of independent fan blades (11) connected to each other in a V shape.

9. The foldable object-supporting component according to any one of claims 1 to 6, wherein the supporting part (1) is formed by connecting and combining a folded structure formed in a folding manner and an assembled structure formed in an assembling manner, the folded structure forms mutually folded fan blades (11) through creases, and the assembled structure is formed by a plurality of groups of independent fan blades (11) connected to each other in a V shape.

10. The foldable object-supporting component according to any one of claims 1 to 6, wherein one end of the supporting part (1) far away from the rotation center is tilted upward.

11. The foldable object-supporting component according to any one of claims 1 to 6, wherein one end of the supporting part (1) corresponding to its own rotation center is provided with a clamping component (14), and one end of the supporting part (1) is folded and clamped together by the clamping component (14).

12. The foldable object-supporting component according to claim 11, wherein the reinforcing part comprises a reinforcing plate (13) arranged at a joint between two adjacent fan blades (11), and one end of the reinforcing plate (13) extends into the clamping component (14) and is clamped by the clamping component (14).

13. The foldable object-supporting component according to claim 11, wherein the fan blade (11) is made of flexible cloth and/or mesh cloth.

14. The foldable object-supporting component according to any one of claims 1 to 6, wherein a fence (4) is arranged at one end of the supporting part (1) far away from the rotation center, the fence (4) comprises a surrounding frame (41) and a plurality of surrounding rods (42), the plurality of surrounding rods (42) are connected to the joint between the two blades (11) at the same height and/or the reinforcing part, and the surrounding frame (41) is installed at the end of the supporting part (1) through the surrounding rods (42) and is unfolded together with the supporting part (1).

15. The foldable object-supporting component according to any one of claims 1 to 6, wherein the supporting part (1) is installed in an inclined posture, one end of the supporting part (1) corresponding to its own rotation center faces downward, and one end of the supporting part (1) far away from the rotation center faces upward.

16. The foldable object-supporting component according to any one of claims 1 to 6, further comprising a first magnetic attraction component and a second magnetic attraction component located at two sides of the supporting part (1) in the length direction, respectively, wherein the first magnetic attraction component and the second magnetic attraction component attract each other when the supporting part (1) is in a folded state.

17. A foldable object-supporting platform, comprising the foldable object-supporting component according to any one of claims 1 to 16, wherein the object-supporting platform further comprises a fixed end surface (2) and a movable end surface (3) which are located at two sides of the supporting part (1) in the length direction, respectively, and are connected with the fan blades (11) at two sides of the supporting part (1);
the fixed end surface (2) is configured to fix the object-supporting platform below an opening-closing door of an object to be installed;
the movable end surface (3) is connected with the opening-closing door of the object to be installed, and when the opening-closing door is opened, the movable end surface (3) drives the supporting part (1) of a clothes-supporting platform to be unfolded; and when the opening-closing door is closed, the movable end surface (3) drives the supporting part (1) of the clothes-supporting platform to be stacked and stored.

18. The foldable object-supporting platform according to claim 17, wherein the movable end surface (3) is connected with the opening-closing door of the object to be installed through a connection point.

19. The foldable object-supporting platform according to claim 17, wherein the first magnetic attraction component and the second magnetic attraction component are arranged on the fixed end surface (2) and the movable end surface (3), respectively.

20. The foldable object-supporting platform according to claim 17, wherein the fixed end surface (2) is a box body with one side open, and the object-supporting component in the folded state is located in the box body;
the movable end surface (3) is a cover, one side of the cover is connected with the box body and is rotatable with respect to the box body, when the opening-closing door is closed, and the cover drives the object-supporting component to be stored in the box body and covers an open part on one side of the box body.
